# FASCICULE DE BREVET EUROPEEN

(11) **EP 4 294 679 B1**
(45) Date de publication et mention de la délivrance du brevet: **27.11.2024**
(21) Numéro de dépôt: 22702929.5
(22) Date de dépôt: 26.01.2022
(51) Int. Cl.: B60R 19/48, B60R 19/52

(54) **ENSEMBLE COMPRENANT UN SUPPORT DE RADAR, UN RADOME ET UN BOUCLIER D'UN VEHICULE AUTOMOBILE**
ANORDNUNG MIT EINEM RADARTRÄGER, EINEM RADOM UND EINER ABSCHIRMUNG EINES KRAFTFAHRZEUGS
ASSEMBLY COMPRISING A RADAR SUPPORT, A RADOME AND A SHIELD OF A MOTOR VEHICLE

(30) Priorité: 17.02.2021 FR 2101505
(43) Date de publication de la demande: 27.12.2023
(73) Titulaire: Renault s.a.s, 92100 Boulogne Billancourt (FR)
(72) Inventeur: MAURIN, François, 92100 BOULOGNE BILLANCOURT (FR)
(86) Numéro de dépôt international: PCT/EP2022/051816
(87) Numéro de publication internationale: WO 2022/175045

(56) Documents cités:
- WO-A1-2019/175408
- DE-A1- 102015 224 924
- FR-A1- 3 056 176

## Description

L'invention concerne un ensemble comprenant un support de radar, un radôme et un bouclier, installé en partie avant d'un véhicule automobile. Elle concerne aussi la partie avant d'un véhicule automobile comprenant ledit ensemble.

Avec l'évolution et la généralisation des systèmes d'aide à la conduite embarqués, de plus en plus de véhicules sont équipés d'un système radar anti-collision destiné à la régulation de la vitesse du véhicule en fonction de distances de sécurité avec l'environnement extérieur. Ce type de système comprend un système de freinage d'urgence « AEBS » ( acronyme anglais de « Advanced Energy Braking System » signifiant littéralement « système de freinage énergétique avancé »). Ce système permet à la voiture de freiner automatiquement si un obstacle potentiel est détecté, notamment un piéton qui traverse ou si la voiture s'approche trop de la voiture qui la précède. Le système de freinage d'urgence AEBS mesure notamment les distances par rapport à l'obstacle potentiel détecté et, si celles-ci sont inférieures à une limite de sécurité, il est en mesure d'activer le freinage à plus forte intensité. Le système reçoit les données relevées par le radar installé à l'avant du véhicule. Par extension, ce type de radar est usuellement appelé radar AEBS.

Un tel radar étant implanté en partie avant du véhicule, il est nécessaire d'assurer une intégrité optimale de ces systèmes sécuritaires contre les chocs.

Selon l'art antérieur, un tel radar est usuellement installé via un support fixé à des éléments de la structure de la caisse, en partie avant du véhicule pour avoir une rigidité du support suffisante. Cet ensemble comprend en outre un radôme, élément protecteur du capteur radar, qui est disposé extérieurement, et qui est en un matériau laissant passer les ondes radar dans la bande de fréquences requise.

Selon un premier art antérieur courant, le support de radar peut être directement fixé à une pièce structurelle de la partie avant du véhicule, comme par exemple à la traverse avant, pièce structurelle de la caisse du véhicule située dans le compartiment moteur, entre deux longerons latéraux. Une telle configuration est par exemple décrite dans la demande de brevet FR3056176.

Comme autre exemple d'art antérieur, le support de radar peut être fixé à la face avant technique (FAT) ou encore à une pièce de tôlerie du véhicule.

Un inconvénient de cet art antérieur est notamment un problème d'ajustement, on observe trop de dispersions géométriques du fait d'un grand nombre de maillons dans la chaîne de cotes. La taille dudit radôme dans ce cas est de l'ordre de 200mm de large sur une centaine de millimètres de long pour absorber le cône de dispersion des ondes radars.

Un autre inconvénient des différents modes connus, est que le radôme doit être d'une taille relativement importante afin de couvrir le cône de dispersion des ondes radar qui est large du fait que le radar est éloigné du radôme. Une telle disposition est relativement onéreuse. Le document DE 10 2015 224924 A1 divulgue un ensemble en partie avant d'un véhicule automobile selon le préambule de la revendication 1.

L'invention vise à résoudre, au moins en partie, ces inconvénients. Elle vise notamment à fournir un nouvel agencement du support de radar en partie avant d'un véhicule.

A cet effet, l'invention propose un ensemble en partie avant d'un véhicule automobile, ledit ensemble comprenant les caractéristiques de la revendication

Selon l'invention, ladite zone de réception et de fixation du radar comprend un logement évidé récepteur dudit radar, et ledit logement est situé en correspondance avec l'emplacement du radôme se disposant extérieurement.

Selon l'invention, la face intérieure du bouclier comprend un élément central supérieur d'indexation de la position du support de radar selon les directions transversale et verticale du bouclier, coopérant avec la partie supérieure dudit support, et au moins deux éléments inférieurs d'indexation et anti-rotation de la position du support de radar au moins selon ladite direction transversale, coopérant avec la partie inférieure du support.

En particulier selon l'invention, le radôme est solidarisé sur la face extérieure de la grille, dans une ouverture que comprend ladite grille d'aération, ladite ouverture formant l'emplacement récepteur du radôme à la grille d'aération, ladite ouverture se situant au droit dudit logement du radar. Par exemple le radôme est clipsé dans ladite ouverture, ladite ouverture étant de la taille du radôme.

Plus particulièrement selon l'invention, ladite première partie transverse et ladite deuxième partie transverse du bouclier appartiennent à la peau du bouclier.

En particulier selon l'invention, le support de radar est situé au centre ou à proximité du centre du bouclier suivant la direction transversale du bouclier.

De préférence selon l'invention, ladite grille d'aération extérieure située entre lesdites première et deuxième parties de bouclier est la grille d'aération inférieure.

Selon un mode de réalisation préféré de l'invention, ledit élément central supérieur d'indexation comprend des nervures sur sa surface externe dont la hauteur est variable. Le réglage de la hauteur des nervures permet d'ajuster la position du support radar. De préférence ledit élément central supérieur d'indexation se présente sous forme d'un élément allongé et globalement perpendiculaire à la face intérieure du bouclier. En particulier il se présente sous forme d'un fût.

Avantageusement selon l'invention, ledit support comprend, en sa partie supérieure, deux moyens de prémaintien latéraux qui reposent respectivement sur deux ailettes latérales que comprend le bouclier en sa face intérieure, afin de maintenir le support lors de son positionnement, en attente d'être fixé.

Selon un mode de réalisation préféré de l'invention, le support radar est constituée d'une seule pièce comprenant deux bretelles latérales comprenant des nervures de rigidification, lesdites bretelles s'étendant de ladite première partie transverse à ladite deuxième partie transverse du bouclier, et chaque extrémité inférieure desdites bretelles définissant les pieds du support qui coopèrent avec lesdits au moins deux éléments inférieurs d'indexation et anti-rotation du bouclier, lesdits pieds comprenant chacun un orifice de fixation permettant de fixer ledit support à ladite première partie transverse du bouclier.

De préférence lesdits éléments inférieurs d'indexation et anti-rotation du bouclier comprennent chacun une butée latérale anti-rotation venant respectivement au contact du côté intérieur respectif d'un dit pied de fixation du support. Autrement dit lesdites butées latérales se situent entre les pieds du support, qui sont de préférence au nombre de deux, et sont au contact de l'intérieur du pied qui leur est respectivement directement adjacent. De préférence lesdits éléments inférieurs d'indexation anti-rotation du bouclier sont au nombre de deux.

En outre, en chaque extrémité supérieure desdites bretelles, est disposé respectivement un trou de prémaintien et de fixation coopérant respectivement avec un plot de fixation latéral de ladite deuxième partie transverse du bouclier, ledit plot comprenant en outre sur sa surface externe des nervures de hauteur réglable permettant d'ajuster la position du support. Le réglable de la hauteur de ces nervures peut coopérer avec le réglage de la hauteur des nervures dudit élément central supérieur d'indexation du bouclier pour régler la position du support de radar.

Avantageusement selon l'invention, le bouclier comprend une troisième partie transverse, supérieure à ladite deuxième partie transverse et jouxtant cette dernière, qui comporte un plastron venant en recouvrement de ladite partie supérieure du support de radar, ledit plastron comprenant un orifice se positionnant autour dudit élément central d'indexation que comprend le bouclier.

De préférence selon ce mode, ledit plastron comprend deux trous de fixation latéraux positionnés en recouvrement des trous de prémaintien et de fixation situés respectivement en extrémités supérieures respectives desdites bretelles du support radar, en outre des moyens de fixation étant introduits dans lesdits trous de fixation latéraux du plastron pour réaliser la fixation dans lesdits plots de fixation latéraux de ladite deuxième partie transverse du bouclier, de sorte que la partie supérieure du support radar est prise en sandwich entre ladite deuxième partie du bouclier et ladite troisième partie du bouclier. La fixation du plastron permet la solidarisation de la partie supérieure du support de radar au bouclier.

De préférence selon l'invention, lesdits moyens de fixation du support radar au bouclier sont des vis. De préférence ces moyens de fixation sont constitués de quatre vis en tout.

Selon l'invention, ledit support de radar comprend une barre transversale délimitant la partie supérieure du logement récepteur du radar, ladite barre comprenant des trous de fixation destinés à la fixation du radar, par exemple par vissage.

Un avantage de l'invention est qu'un radôme de taille plus petite que ceux usuellement utilisés en art antérieur peut être utilisé, du fait d'un ajustement précis et facilité du positionnement du support, notamment de l'emplacement réservé pour loger le radar, le radôme étant tout proche du logement du radar et donc du radar.

Avantageusement ledit radôme a une forme de plaque dont la plus grande dimension d'un côté de la plaque est de l'ordre d'une centaine de millimètres, en particulier comprise entre 90 et 130 millimètres, ou encore entre 98 et 128 mm.

Avantageusement selon l'invention, le support de radar est en un matériau plastique chargé, de préférence en polypropylène chargé en fibres de verre, et plus préférentiellement chargé entre 25 à 35 % en poids de fibres de verre. Un tel matériau augmente la rigidité de l'ensemble et permet d'avoir un meilleur comportement vibratoire.

L'invention a aussi pour objet un véhicule automobile comprenant un ensemble tel que décrit précédemment.

D'autres particularités et avantages de l'invention ressortiront à la lecture de la description faite ci-après de modes de réalisation particuliers de l'invention, donné à titre indicatif mais non limitatif, en référence aux dessins annexés.
[Fig. 1] illustre par une vue en perspective de trois-quarts latérale, un ensemble selon l'invention comprenant un bouclier avant, un support de radar et un radôme, installé en partie avant d'un véhicule automobile, vu depuis l'intérieur de ladite partie avant du véhicule.
[Fig. 2] représente selon une vue en perspective de trois-quarts latérale, ledit ensemble selon la figure 1, vu depuis l'extérieur du véhicule, le radôme n'étant pas représenté.
[Fig. 3] représente un ensemble selon l'invention comprenant un bouclier avant, un support de radar, et un radôme, installé en partie avant d'un véhicule automobile selon une vue en volume et de face, vu depuis l'intérieur de la partie avant du véhicule, le radôme n'étant pas représenté.
[Fig. 4] illustre schématiquement, selon une vue en coupe longitudinale dans le plan XZ, une partie avant d'un véhicule automobile comprenant un ensemble, selon la figure 3, vue depuis l'extérieur du véhicule, le radôme étant représenté.
[Fig. 5] représente un repère trièdre XYZ représenté par rapport à un véhicule, ce repère étant utilisé pour commenter les figures.

Dans la présente description, les termes avant, arrière, supérieur, inférieur, font référence respectivement aux directions avant et arrière, supérieure et inférieure du véhicule, lorsque l'ensemble est monté sur le véhicule.

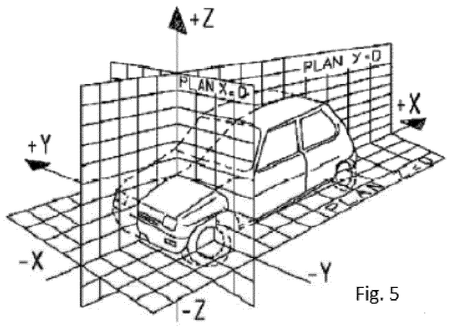

Les orientations exprimées dans la description des figures sont données en référence à un repère classique XYZ du véhicule tel que représenté en figure 5, et dans lequel X représente la direction longitudinale avant-arrière du véhicule, orientée vers l'arrière, Y la direction transversale du véhicule, orientée vers la droite, et Z la direction verticale orientée vers le haut du véhicule, ce dernier reposant sur le sol.

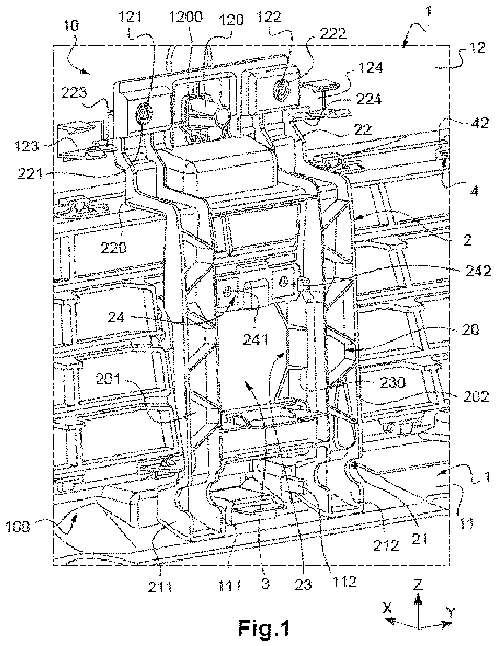

La figure 1 illustre schématiquement par une vue en perspective de trois-quarts latérale, une partie avant d'un véhicule automobile comportant un ensemble conforme à l'invention, comprenant le bouclier avant 1 vu depuis sa face intérieure 100, un support de radar 2 qui comporte un logement évidé 23 récepteur du radar, et un radôme 3, le radar lui-même n'étant pas représenté.

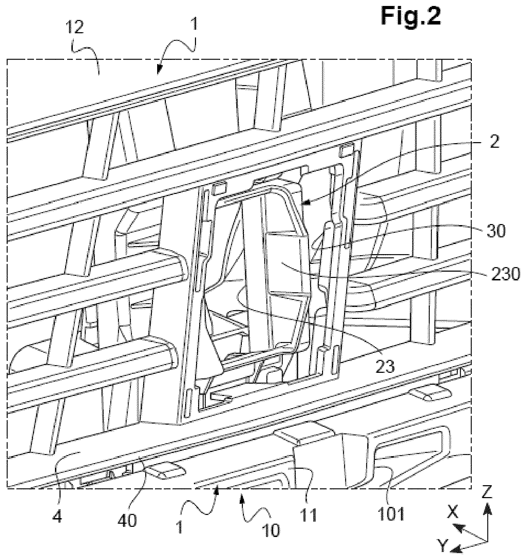

La figure 2 illustre schématiquement par une vue en perspective de trois-quarts latérale, une partie avant d'un véhicule automobile comportant l'ensemble selon la figure 1, comprenant le support de radar 2 et le bouclier avant 1 vu depuis sa face extérieure 101, au niveau de la grille d'aération inférieure 4 comportant l'emplacement récepteur du radôme 3.

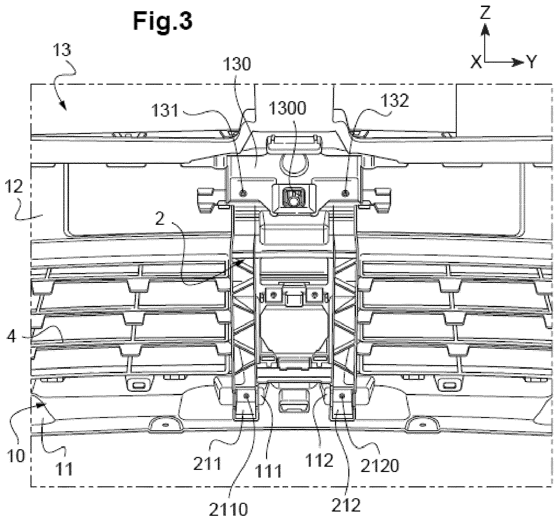

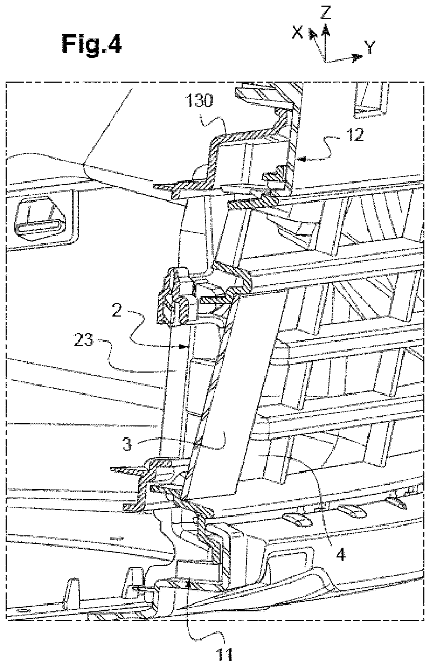

La figure 3 représente un ensemble conforme à l'invention, en partie avant d'un véhicule automobile selon une vue en volume et de face, comprenant un bouclier avant 1 vu depuis sa face intérieure 100, un support de radar 2 qui comporte un logement évidé 23 récepteur du radar, ledit ensemble comprenant en outre un plastron 130 du cadre récepteur de la grille d'aération supérieure, ledit cadre faisant partie du bouclier 1. Le radar lui-même n'est pas représenté sur cette figure, ni le radôme. La figure 4 représente cet ensemble en coupe, vu depuis l'extérieur.

En référence aux figures 1 et 2, le bouclier avant 1 comprend une première partie transverse 11, constituant une partie inférieure du bouclier, et une deuxième partie transverse 12, située plus haut que ladite première partie cette deuxième partie constituant une partie médiane 12 du bouclier. Entre ces deux parties, se situe la grille d'aération inférieure 4, par exemple fixée par clipsage. Ces deux parties inférieure 11 et médiane 12 de bouclier appartiennent plus précisément à la peau de bouclier 10 qui constitue la pièce inférieure du bouclier 1. Elles forment respectivement la partie inférieure 11 et la partie supérieure 12 de ladite peau de bouclier 10. La peau de bouclier comprend au moins une ouverture réceptrice de la grille d'aération inférieure 4.

Le support de radar 2 est une pièce monobloc qui comprend une partie inférieure 21 qui se solidarise à la partie inférieure 11 du bouclier, et une partie supérieure 22 qui se solidarise à la partie médiane 12 du bouclier. Ledit support de radar comprend une partie centrale 20 située entre ses dites parties inférieure 21 et supérieure 22.

La partie supérieure 22 du support épouse la forme de la partie haute de la grille 4 qui comprend une paroi intérieure sensiblement horizontale 42, grâce à une forme en équerre 220 constituée de deux portions sensiblement perpendiculaires entre elles, l'une étant sensiblement verticale et l'autre sensiblement horizontale, de sorte que ladite portion horizontale passe juste au-dessus de ladite paroi horizontale 42 de la grille d'aération inférieure 4.

La partie de support centrale 20 comprend un logement 23 qui est évidé pour recevoir le radar, l'évidement venant en correspondance avec l'emplacement 30 réservé pour le radôme 3, ce dernier étant disposé côté extérieur 40 de la grille d'aération inférieure 4 (Fig.2). Ledit logement comprend une paroi 230 délimitant le périmètre de l'évidement dudit logement 23, et s'étendant à l'avant du support, en direction d'une ouverture de la grille d'aération définissant l'emplacement 30 pour le radôme, sans déborder dans ladite ouverture 30. Ledit logement 23 comprend en outre une barre transversale 24 pour la fixation du radar, cette barre délimitant la partie supérieure de l'évidement, la fixation du radar se faisant à l'aide de deux vis qui se fixent respectivement dans les orifices de fixation 241, 242 de ladite barre transversale 24.

Afin que le logement 23 pour le radar, et notamment que sa portion évidée se trouve centrée et bien positionnée face au radôme 3 qui est d'une taille relativement petite, le bouclier 1 comprend un fût central d'indexation 120 en sa partie médiane 12 qui coopère avec un trou d'indexation 223 dudit support 2, en partie supérieure du support, pour un indexage selon la direction transversale Y et selon la direction verticale Z afin de régler le centrage dudit logement 23 selon la direction transversale Y et aussi la position du logement du radar 23 selon la direction verticale Z. Ledit fût d'indexation 120 comprend des nervures 1200 sur sa surface externe, dont la hauteur peut être réglée pour l'adapter au modèle de bouclier et de support, en particulier aux dimensions du bouclier et du support, afin de bien pouvoir centrer le logement du radar avec le radôme.

La partie inférieure 11 du bouclier comprend deux éléments latéraux 111, 112 d'indexation selon la direction transversale Y pour contrôler le centrage du support de radar 2, en empêchant notamment une rotation latérale (+Y, -Y) des deux pieds de fixation 211, 212 que comprend la partie inférieure 21 du support et qui se solidarisent à la partie inférieure 11 du bouclier. Lesdits éléments latéraux 111, 112 forment des butées positionnées respectivement sur le côté interne desdits pieds de fixation du support.

En outre ledit support comprend, en sa partie supérieure 22, deux branches de prémaintien latérales 223, 224 qui coopèrent respectivement avec deux ailettes latérales 123, 124 que comprend le bouclier en sa face intérieure 100, lesdites branches de maintien latérales du support venant reposer sur lesdites ailettes du bouclier lors du positionnement du support, en attente d'être fixé.

Une fois le support de radar positionné correctement grâce aux différents éléments d'indexation 120, 111, 112, afin que le logement récepteur du radar 23 se trouve bien face à l'emplacement 30 du radôme, on fixe le support en la partie médiane 12 et en la partie inférieure 11 du bouclier.

Deux trous de fixation latéraux supérieurs 221, 222 et les pieds de fixation 211, 212 latéraux du support de radar se trouvent respectivement aux extrémités de deux bretelles latérales 201, 202, rigidifiées par un ensemble de nervures. Ces deux bretelles latérales s'étendent sur toute la hauteur (direction Z) du support, et délimitent latéralement ledit support.

Le bouclier comporte sur sa face intérieure 100, en sa partie médiane 12, deux plots de fixation latéraux 121, 122 dans lesquels se fixent, par exemple par vissage, la partie supérieure 22 dudit support 2, lesdits plots de fixation 121, 122 passant respectivement à travers les deux trous de fixation latéraux supérieurs 221, 222 que comprend ladite partie supérieure 22 dudit support. Ces plots de fixation latéraux 121, 122 que comprend le bouclier 1 sont avantageusement disposés de part et d'autre du fût central d'indexation 120, et sensiblement suivant la direction verticale Z au même niveau que ledit plot central d'indexation 120. Lesdits plots de fixation latéraux peuvent aussi comprendre des nervures sur leur surface externe pour être adaptée audit fût d'indexation 120.

Le support de radar étant constitué d'une seule pièce, sa dite partie centrale 20 ne comporte pas de moyens de fixation pour être fixée directement au bouclier 1 ou à la grille d'aération 4. De ce fait le support, notamment sa partie centrale recevant le radar bénéficie de toute la rigidité de la zone et aura un meilleur comportement vibratoire.

En référence à la figure 3, le bouclier comprend en outre une partie transverse supérieure 13, formant une pièce supérieure réceptrice d'une grille d'aération supérieure. Cette pièce supérieure du bouclier est délimitée par un cadre qui comprend au moins une ouverture réceptrice d'une grille d'aération supérieure (non visible sur la figure 3). Le cadre comprend un plastron 130 en sa portion inférieure qui forme la jonction avec la partie supérieure 12 de la peau de bouclier 10, autrement dit au niveau de la partie médiane 12 du bouclier. Ledit plastron 130 est centré selon la direction transversale Y, et vient en recouvrement de la partie supérieure 22 du support de radar, au niveau de ladite partie médiane 12 du bouclier. Ledit plastron comprend un orifice de centrage 1300 qui est accroché au fût 120 d'indexation YZ de sorte que le plastron 130 est bien centré, et par conséquent aussi la pièce supérieure du bouclier, en recouvrement du haut du support de radar. Ledit plastron 130 comprend des trous de fixation latéraux 131, 132 qui viennent en correspondance avec les trous de fixation supérieurs 221, 222 du support de radar. Le support de radar 2 est donc pris en sandwich en sa partie supérieure 22 entre la peau de bouclier 10 et la partie transverse supérieure 13 du bouclier.

Ceci peut permettre d'améliorer la rigidité des fixations du support de radar, notamment au niveau de la jonction des pièces du bouclier, qui se trouve dans une zone en générale avancée du bouclier selon la direction longitudinale du véhicule X et donc davantage soumise aux déformations en cas de choc.

Selon l'exemple préféré, le support est réalisé en polypropylène (PP) chargé en fibres de verre à 30% en poids, afin de contribuer à avoir une rigidité importante de l'ensemble et d'avoir un bon comportement vibratoire.

Le radôme a une aire relativement petite, du fait que le radar peut être fixé dans un logement bien centré sur le radôme et très proche du radôme, comme on peut notamment le voir sur la vue en coupe (Fig. 4). Le cône de dispersion de fréquences du radar est donc relativement petit et bien protégé derrière le radôme. Par exemple le radôme a une longueur de côté de l'ordre 100 millimètres. Par exemple le radôme est de forme rectangulaire et fait de l'ordre de 125 mm (en hauteur selon Z) par 100 mm (en largeur selon Y).

L'invention a atteint ses objectifs en proposant un agencement du bouclier avec un support de radar permettant de fixer un radar centré et proche du radôme. L'ensemble selon l'invention forme une chaine de cotes comportant peu de maillons et assure une bonne rigidité de la zone.

En outre le support de radar ne se fixe pas à un élément structurel de la caisse du véhicule. Il présente une rigidité et une fixation au bouclier prévenant au mieux les phénomènes vibratoires, tout en présentant une certaine plasticité permettant d'absorber au mieux les chocs

## Revendications

1. Ensemble en partie avant d'un véhicule automobile, ledit ensemble comprenant un radôme (3), un support de radar (2), un bouclier avant (1) d'un véhicule, ledit bouclier comportant une face intérieure (100) et une face extérieure (101), et qui s'étend selon des directions transversale, longitudinale et verticale correspondant respectivement aux directions transversale, longitudinale et verticale d'un véhicule reposant sur ses roues, lorsque le bouclier est monté à l'avant du véhicule, ledit bouclier comportant une première partie transverse (11) et une deuxième partie transverse (12) supérieure à ladite première partie transverse, et entre lesquelles est installée une grille d'aération extérieure (4) comprenant un emplacement (30) récepteur du radôme, ledit radôme se solidarisant à ladite grille, ledit support de radar (2) étant constitué d'une pièce monobloc s'étendant verticalement de ladite première partie de bouclier (11) à ladite deuxième partie de bouclier (12), ledit support comprenant une partie supérieure (22) solidarisée à ladite deuxième partie de bouclier (12) et une partie inférieure (21) fixée à ladite première partie de bouclier (11), ledit support comportant en outre une zone de réception et de fixation du radar (20), située entre lesdites parties supérieure et inférieure du support, qui comprend un logement évidé (23) récepteur dudit radar situé en correspondance avec l'emplacement (30) du radôme se disposant extérieurement, et le bouclier comprenant un élément central supérieur d'indexation (120) de la position du support de radar selon les directions transversale et verticale du bouclier, coopérant avec la partie supérieure dudit support (22), et au moins deux éléments inférieurs (111, 112) d'indexation et anti-rotation de la position du support de radar au moins selon ladite direction transversale, coopérant avec ladite partie inférieure du support (21), **caractérisé en ce que** ladite pièce monobloc du support de radar (2) et les éléments d'indexation et anti-rotation (120, 111, 112) sont disposés sur la face intérieure (100) du bouclier.

2. Ensemble selon la revendication 1, **caractérisé en ce que** ledit élément central supérieur d'indexation (120) comprend des nervures (1200) sur sa surface externe dont la hauteur est variable.

3. Ensemble selon l'une des revendications 1 à 2, **caractérisé en ce que** le support radar (2) est constituée d'une seule pièce comportant deux bretelles latérales (201, 202) comprenant des nervures de rigidification, lesdites bretelles s'étendant de ladite première partie transverse (11) à ladite deuxième partie transverse du bouclier (12), et chaque extrémité inférieure desdites bretelles définissant les pieds du support (211, 212) qui coopèrent avec lesdits au moins deux éléments inférieurs d'indexation et anti-rotation du bouclier (111, 112), lesdits pieds comprenant chacun un orifice de fixation (2110 , 2120) permettant de fixer ledit support à ladite première partie transverse du bouclier (11).

4. Ensemble selon la revendication 3, **caractérisé en ce que en ce que** lesdits éléments inférieurs d'indexation et anti-rotation du bouclier (111, 112) comprennent chacun une butée latérale anti-rotation venant respectivement au contact du côté intérieur respectif d'un dit pied de fixation du support (211, 212).

5. Ensemble selon l'une des revendications 3 à 4, **caractérisée en ce qu'**en chaque extrémité supérieure desdites bretelles, est disposé respectivement un trou de prémaintien et de fixation (221, 222) coopérant respectivement avec un plot de fixation latéral (121, 122) de ladite deuxième partie transverse du bouclier (12), ledit plot (121, 122) comprenant en outre sur sa surface externe des nervures de hauteur réglable permettant d'ajuster la position du support.

6. Ensemble selon l'une des revendications 1 à 5 **caractérisé en ce que** ledit bouclier comprend une troisième partie transverse (13), supérieure à la dite deuxième partie transverse (12) et jouxtant cette dernière, qui comporte un plastron (130) venant en recouvrement de la partie supérieure du support de radar (22), ledit plastron comprenant un orifice (1300) se positionnant autour dudit élément central supérieur d'indexation (120) que comprend le bouclier.

7. Ensemble selon l'une des revendications 6 et 5, **caractérisé en ce que** ledit plastron (130) comprend deux trous de fixation latéraux (131, 132) positionnés en recouvrement des trous de prémaintien et de fixation (221, 222) situés respectivement en extrémités supérieures respectives desdites bretelles du support radar, en outre des moyens de fixation étant introduits dans lesdits trous de fixation latéraux du plastron pour réaliser la fixation dans lesdits plots de fixation latéraux de ladite deuxième partie transverse du bouclier, de sorte que la partie supérieure du support radar est prise en sandwich entre ladite deuxième partie du bouclier et ladite troisième partie du bouclier.

8. Ensemble selon l'une des revendications 1 à 7, dans lequel ledit support de radar comprend une barre transversale (24) délimitant la partie supérieure du logement (23) récepteur du radar, ladite barre comprenant des trous de fixation (241, 242) destinés à la fixation du radar.

9. Ensemble selon l'une des revendications 1 à 8, **caractérisé en ce que** ledit support (2) comprend, en sa partie supérieure, deux moyens de prémaintien latéraux (223, 224) qui reposent respectivement sur deux ailettes latérales (123, 124) que comprend le bouclier en sa face intérieure, afin de maintenir le support lors de son positionnement, en attente d'être fixé.

10. Partie avant d'un véhicule automobile comprenant un ensemble comprenant un radôme (3), un support de radar (2) et un bouclier avant (1), défini selon l'une des revendications 1 à 9.

## Patentansprüche

1. Anordnung im vorderen Teil eines Kraftfahrzeugs, wobei die Anordnung ein Radom (3), einen Radarträger (2), eine vordere Abschirmung (1) eines Fahrzeugs aufweist, wobei die Abschirmung eine Innenseite (100) und eine Außenseite (101) aufweist und sich in Quer-, Längs- und Vertikalrichtung erstreckt, die jeweils der Quer-, Längs- und Vertikalrichtung eines auf seinen Rädern stehenden Fahrzeugs entspricht, wenn die Abschirmung an der Vorderseite des Fahrzeugs angebracht ist, wobei die Abschirmung einen ersten Querteil (11) und einen zweiten Querteil (12) aufweist, der über dem ersten Querteil liegt, und zwischen denen ein äußeres Lüftungsgitter (4) installiert ist, das einen Ort (30) zur Aufnahme des Radons aufweist, wobei das Radom fest mit dem Gitter verbunden ist, wobei der Radarträger (2) aus einem einstückigen Teil besteht, das sich vertikal von dem ersten Teil der Abschirmung (11) zu dem zweiten Teil der Abschirmung (12) erstreckt, wobei der Träger einen oberen Teil (22) aufweist, der fest mit dem zweiten Teil der Abschirmung (12) verbunden ist, und einen unteren Teil (21), der an dem ersten Teil der Abschirmung (11) befestigt ist, wobei der Träger darüber hinaus einen Bereich zur Aufnahme und Befestigung des Radars (20) aufweist, der sich zwischen dem oberen und dem unteren Teil des Trägers befindet und ein ausgehöhltes Gehäuse (23) zur Aufnahme des Radars aufweist, das sich in Übereinstimmung mit dem Ort (30) des außen angeordneten Radoms befindet, und wobei die Abschirmung ein oberes zentrales Indexierelement (120) für die Position des Radarträgers entlang der Quer- und Vertikalrichtung der Abschirmung aufweist, das mit dem oberen Teil des genannten Trägers (22) zusammenwirkt, und mindestens zwei untere Elemente (111, 112) zur Indexierung und Rotationsverhinderung der Position des Radarträgers mindestens in der Querrichtung, die mit dem unteren Teil des Trägers (21) zusammenwirken, **dadurch gekennzeichnet, dass** das einstückige Teil des Radarträgers (2) und die Elemente zur Indexierung und Rotationsverhinderung (120, 111, 112) an der Innenseite (100) der Abschirmung angeordnet sind.

2. Anordnung nach Anspruch 1, **dadurch gekennzeichnet, dass** das obere zentrale Indexierelement (120) auf seiner Außenfläche Rippen (1200) aufweist, deren Höhe variabel ist.

3. Anordnung nach einem der Ansprüche 1 bis 2, **dadurch gekennzeichnet, dass** der Radarträger (2) aus einem einzigen Stück besteht, das zwei Seitenstützen (201, 202) mit Versteifungsrippen aufweist, wobei sich die Stützen von dem ersten Querteil der Abschirmung (11) zu dem zweiten Querteil der Abschirmung (12) erstrecken und jedes untere Ende der Stützen die Füße des Trägers (211, 212) definiert, die mit den mindestens zwei unteren Elementen zur Indexierung und Rotationsverhinderung der Abschirmung (111, 112) zusammenwirken, wobei die Füße jeweils eine Befestigungsöffnung (2110, 2120) aufweisen, die es ermöglicht, den Träger an dem ersten Querteil der Abschirmung (11) zu befestigen.

4. Anordnung nach Anspruch 3, **dadurch gekennzeichnet, dass** die unteren Elemente zur Indexierung und Rotationsverhinderung der Abschirmung (111, 112) jeweils einen seitlichen Rotationsverhinderungsanschlag aufweisen, der jeweils die jeweilige Innenseite eines der genannten Befestigungsfüße des Trägers (211, 212) berührt.

5. Anordnung nach einem der Ansprüche 3 bis 4, **dadurch gekennzeichnet, dass** an jedem oberen Ende der Stützen jeweils ein Vorhalte- und Befestigungsloch (221, 222) angeordnet ist, das jeweils mit einem seitlichen Befestigungsklotz (121, 122) des zweiten Querteils der Abschirmung (12) zusammenwirkt, wobei der Klotz (121, 122) darüber hinaus auf seiner Außenfläche Rippen mit einstellbarer Höhe aufweist, die es ermöglichen, die Position des Trägers einzustellen.

6. Anordnung nach einem der Ansprüche 1 bis 5, **dadurch gekennzeichnet, dass** die Abschirmung einen dritten Querteil (13) aufweist, der über dem zweite Querteil (12) liegt und an diesen angrenzt und der eine Frontplatte (130) aufweist, die den oberen Teil des Radarträgers (22) überlappt, wobei die Frontplatte eine Öffnung (1300) aufweist, die um das obere zentrale Indexierungselement (120) herum angeordnet ist, das die Abschirmung aufweist.

7. Anordnung nach einem der Ansprüche 6 und 5, **dadurch gekennzeichnet, dass** die Frontplatte (130) zwei seitliche Befestigungslöcher (131, 132) aufweist, die in Überdeckung des Vorhalte- und Befestigungsloch (221, 222) positioniert sind, die sich jeweils an den jeweiligen oberen Enden der Stützen des Radarträgers befinden, dass darüber hinaus Befestigungsmittel in die seitlichen Befestigungslöcher der Frontplatte eingeführt sind, um die Befestigung in den seitlichen Befestigungsklötzen des zweiten Querteils der Abschirmung zu bewirken, so dass der obere Teil des Radarträgers zwischen dem zweiten Teil der Abschirmung und dem dritten Teil der Abschirmung eingeklemmt wird.

8. Anordnung nach einem der Ansprüche 1 bis 7, wobei der Radarträger eine Querstange (24) aufweist, die den oberen Teil des Gehäuses (23) zur Aufnahme des Radars begrenzt, wobei die Stange Befestigungslöcher (241, 242) zum Befestigen des Radars aufweist.

9. Anordnung nach einem der Ansprüche 1 bis 8, **dadurch gekennzeichnet, dass** der Träger (2) an seinem oberen Teil zwei seitliche Vorhaltemittel (223, 224) aufweist, die jeweils auf zwei seitlichen Flügeln (123, 124) ruhen, die die Abschirmung an ihrer Innenseite aufweist, um den Träger bei seiner Positionierung zu halten, bis er befestigt ist.

10. Vorderteil eines Kraftfahrzeugs mit einer Anordnung, die ein Radom (3), einen Radarträger (2) und eine vordere Abschirmung (1) aufweist, definiert nach einem der Ansprüche 1 bis 9.

## Claims

1. Assembly at the front of a motor vehicle, said assembly comprising a radome (3), a radar support (2), and a front protective moulding (1) of a vehicle, said protective moulding comprising an inner face (100) and an outer face (101) and extending in transverse, longitudinal and vertical directions corresponding respectively to the transverse, longitudinal and vertical directions of a vehicle resting on the wheels thereof, when the protective moulding is mounted on the front of the vehicle, said protective moulding comprising a first transverse portion (11) and a second transverse portion (12) above said first transverse portion, between which is installed an external ventilation grille (4) comprising a receiving location (30) for the radome, said radome being rigidly connected to said grille, said radar support (2) being a one-piece part extending vertically from said first protective-moulding portion (11) to said second protective-moulding portion (12), said support comprising an upper portion (22) rigidly connected to said second protective-moulding portion (12) and a lower portion (21) fastened to said first protective-moulding portion (11), said support further comprising a receiving and fastening zone for the radar (20) located between said upper portion and said lower portion of the support and comprising a recessed receiving seat (23) for said radar that coincides with the location (30) for the externally arranged radome, and the protective moulding comprising an upper central indexing element (120) for the position of the radar support in the transverse and vertical directions of the protective moulding, cooperating with the upper portion (22) of said support, and at least two lower indexing and anti-rotation elements (111, 112) for the position of the radar support acting at least in said transverse direction, cooperating with said lower portion (21) of the support, **characterized in that** said one-piece part of the radar support (2) and the indexing and anti-rotation elements (120, 111, 112) are arranged on the inner face (100) of the protective moulding.

2. Assembly according to Claim 1, **characterized in that** said upper central indexing element (120) comprises ribs (1200) of adjustable height on the outer surface thereof.

3. Assembly according to either of Claims 1 and 2, **characterized in that** the radar support (2) is a single part with two side straps (201, 202) comprising stiffening ribs, said straps extending from said first transverse portion (11) to said second transverse portion (12) of the protective moulding, and each lower end of said straps forming the feet (211, 212) of the support, which cooperate with said at least two lower indexing and anti-rotation elements (111, 112) of the protective moulding, each of said feet having a fastening orifice (2110, 2120) for fastening said support to said first transverse portion (11) of the protective moulding.

4. Assembly according to Claim 3, **characterized in that** each of said lower indexing and anti-rotation elements (111, 112) of the protective moulding comprises a lateral anti-rotation stop respectively in contact with the respective inner side of one of said fastening feet (211, 212) of the support.

5. Assembly according to either of Claims 3 and 4, **characterized in that** each upper end of said straps has a respective pre-holding and fastening hole (221, 222) cooperating respectively with a lateral fastening stud (121, 122) of said second transverse portion (12) of the protective moulding, said stud (121, 122) further comprising ribs of adjustable height on the outer surface thereof to enable the position of the support to be adjusted.

6. Assembly according to one of Claims 1 to 5, **characterized in that** said protective moulding comprises a third transverse portion (13) arranged above and beside said second transverse portion (12), that comprises a faceplate (130) overlapping the upper portion (22) of the radar support, said faceplate having an orifice (1300) positioned about said upper central indexing element (120) on the protective moulding.

7. Assembly according to either of Claims 6 and 5, **characterized in that** said faceplate (130) comprises two lateral fastening holes (131, 132) overlapping the pre-holding and fastening holes (221, 222) respectively located at the respective upper ends of said straps of the radar support, with fastening means also being inserted into said lateral fastening holes of the faceplate to fasten said second transverse portion of the protective moulding in said lateral fastening studs, so that the upper portion of the radar support is sandwiched between said second portion of the protective moulding and said third portion of the protective moulding.

8. Assembly according to one of Claims 1 to 7, wherein said radar support comprises a transverse bar (24) delimiting the upper portion of the receiving seat (23) for the radar, said bar comprising fastening holes (241, 242) for fastening the radar.

9. Assembly according to one of Claims 1 to 8, **characterized in that** said support (2) comprises, in the upper portion thereof, two lateral pre-holding means (223, 224) that rest respectively on two lateral flanges (123, 124) on the inner face of the protective moulding, in order to hold the support in position before fastening.

10. Front of a motor vehicle comprising an assembly including a radome (3), a radar support (2) and a front protective moulding (1), as defined in one of Claims 1 to 9.
